(19) **Europäisches Patentamt / European Patent Office / Office européen des brevets**

(11) **EP 4 425 601 B1**

(12) **EUROPEAN PATENT SPECIFICATION**

(45) Date of publication and mention
of the grant of the patent:
**28.01.2026 Bulletin 2026/05**

(21) Application number: **24156599.3**

(22) Date of filing: **08.02.2024**

(51) International Patent Classification (IPC):
*H01M 4/131* (2010.01)  *H01M 4/505* (2010.01)
*H01M 4/525* (2010.01)  *H01M 10/0562* (2010.01)
*H01M 4/36* (2006.01)  *H01M 4/58* (2010.01)

(52) Cooperative Patent Classification (CPC):
**H01M 4/131; H01M 4/366; H01M 4/505;
H01M 4/525; H01M 4/5805; H01M 4/5815;
H01M 4/582; H01M 4/5825; H01M 10/0562;**
H01M 2300/0068; Y02E 60/10

(54) **POSITIVE ELECTRODE ACTIVE MATERIAL, POSITIVE ELECTRODE, ALL-SOLID-STATE BATTERY, AND METHOD OF PRODUCING POSITIVE ELECTRODE ACTIVE MATERIAL**

POSITIVELEKTRODENAKTIVMATERIAL, POSITIVELEKTRODE, FESTSTOFFBATTERIE UND VERFAHREN ZUR HERSTELLUNG EINES POSITIVELEKTRODENAKTIVMATERIALS

MATÉRIAU ACTIF D'ÉLECTRODE POSITIVE, ÉLECTRODE POSITIVE, BATTERIE ENTIÈREMENT SOLIDE ET PROCÉDÉ DE PRODUCTION DE MATÉRIAU ACTIF D'ÉLECTRODE POSITIVE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.03.2023 JP 2023031964**

(43) Date of publication of application:
**04.09.2024 Bulletin 2024/36**

(73) Proprietor: **TOYOTA JIDOSHA KABUSHIKI KAISHA
Toyota-shi, Aichi-ken, 471-8571 (JP)**

(72) Inventor: **KUBOTA, Masaru
Toyota-shi, 471-8571 (JP)**

(74) Representative: **D Young & Co LLP
3 Noble Street
London EC2V 7BQ (GB)**

(56) References cited:
**EP-A1- 4 024 514      WO-A1-2021/221000
US-A1- 2022 173 393**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS REFERENCE TO RELATED APPLICATIONS

This nonprovisional application is based on Japanese Patent Application No. 2023-031964 filed on March 2, 2023, with the Japan Patent Office.

BACKGROUND OF THE DISCLOSURE

Field

The present disclosure relates to a positive electrode active material, a positive electrode, an all-solid-state battery, and a method of producing a positive electrode active material.

Description of the Background Art

Japanese Patent Laying-Open No. 2003-338321 discloses forming a film of inorganic solid electrolyte between a positive electrode material and an organic electrolyte.
WO 2021/2210000 A1 relates to a positive electrode material and battery. EP 4 024 514 A1 relates to a preparation method and application of a solid-state battery. US 2022/0173393 A1 relates to a coated cathode active material, method for producing a coated cathode material and all solid-state battery.

SUMMARY OF THE DISCLOSURE

Sulfide-based all-solid-state batteries (which may be simply called "all-solid-state batteries" hereinafter) have been developed. An all-solid-state battery comprises a sulfide solid electrolyte. At the positive electrode, active material particles have a high electric potential. When the sulfide solid electrolyte comes into direct contact with active material particles at the positive electrode, the sulfide solid electrolyte may become degraded. As a result of degradation of the sulfide solid electrolyte (an ion conduction path), battery resistance may increase. To address this problem, forming a coating film on the surface of the active material particles has been suggested. The coating film may inhibit direct contact between the active material particles and the sulfide solid electrolyte, thereby reducing degradation of the sulfide solid electrolyte. However, the coating film is a resistance component. There is room for improvement in battery resistance.
An object of the present disclosure is to reduce battery resistance.
Hereinafter, the technical configuration and effects of the present disclosure will be described. It should be noted that the action mechanism according to the present specification includes presumption. The action mechanism does not limit the technical scope of the present disclosure.
A positive electrode active material comprises an active material particle and a coating film. The coating film covers at least part of a surface of the active material particle. The coating film includes a first compound or a second compound.
The first compound includes a glass network forming element. The first compound does not include phosphorus.
The first compound satisfies the relationship of the following expression (1).

$$0.55 \leq C_{Li}/C_E \leq 1.03 \qquad (1)$$

The second compound includes phosphorus and the glass network forming element.
The second compound satisfies the relationship of the following expression (2).

$$0.20 \leq C_P/C_E \leq 8.72 \qquad (2)$$

In the above expression (1) and the expression (2), each of $C_{Li}$, $C_E$, and $C_P$ represents an element concentration measured by X-ray photoelectron spectroscopy. $C_{Li}$ represents an element concentration of lithium. $C_E$ represents an element concentration of the glass network forming element, wherein the glass network forming element is boron. $C_P$ represents an element concentration of phosphorus.
In the present disclosure, for the sake of convenience, a glass network forming element may be expressed by the symbol "E". The first compound includes E and does not include P. B is E. Conventionally, as a material of a coating film, $Li_3BO_3$ is known. In $Li_3BO_3$, the relationship of "$C_{Li}/C_E=3$" is satisfied. On the other hand, in the first compound, the relationship of "$0.55 \leq C_{Li}/C_E \leq 1.03$" is satisfied [the above-mentioned expression (1)]. That is, the Li-ion concentration of the first compound is lower than that of $Li_3BO_3$.

The coating film is a Li-ion conductor. When the carrier concentration (the Li-ion concentration) of the coating film decreases, ionic conductivity is conceivable to decrease. That is, battery resistance is conceivable to be enhanced. However, according to a novel finding of the present disclosure, when the carrier concentration decreases, ionic conductivity may rather increase. That is, it is conceivable that the first compound which satisfies the relationship of the above-mentioned expression (1) may exhibit a high ionic conductivity as compared to $Li_3BO_3$. When the ionic conductivity of the coating film increases, battery resistance is expected to be reduced.

The second compound includes P. Conventionally, as a material of a coating film, $Li_3PO_4$ is also known. In addition to P, the second compound further includes E. In the second compound, the relationship of "$0.20 \leq C_P/C_E \leq 8.72$" is satisfied [the above-mentioned expression (2)]. When a P-including anion (such as $PO_x^{a-}$, for example) and an E-including anion (such as $BO_x^{a-}$, for example) coexist in such a manner that the relationship of the above-mentioned expression (2) is satisfied, a mixed anion effect is expected to be exhibited to a great extent. Due to the mixed anion effect, the second compound is conceivable to exhibit a high ionic conductivity as compared to $Li_3PO_4$. That is, battery resistance is expected to be reduced.

In the positive electrode active material the second compound may further satisfy the relationship of the following expression (3).

$$0.49 \leq C_{Li}/(C_P+C_E) \leq 2.38 \qquad (3)$$

In $Li_3PO_4$, the relationship of "$C_{Li}/C_P=3$" is satisfied. The second compound which satisfies the relationship of the above-mentioned expression (3) has a low carrier concentration as compared to $Li_3PO_4$. Due to the decrease of the carrier concentration, ionic conductivity is expected to be enhanced.

The positive electrode active material may have a covering rate of 89% or more, for example. The covering rate is measured by X-ray photoelectron spectroscopy.

With the covering rate being 89% or more, endurance is expected to be enhanced, for example.

A positive electrode comprises the positive electrode active material and a sulfide solid electrolyte.

An all-solid-state battery comprises the positive electrode.

A method of producing a positive electrode active material comprises the following (a) and (b):

    (a) preparing a mixture by mixing a coating liquid and an active material particle; and
    (b) producing a positive electrode active material by drying the mixture.

The coating liquid includes a first solute or a second solute and a solvent.

The first solute includes a glass network forming element. The first solute does not include phosphorus. The first solute satisfies the relationship of the following expression (4).

$$0 \leq n_{Li}/n_E \leq 1 \qquad (4)$$

The second solute includes phosphorus and the glass network forming element. The second solute satisfies the relationship of the following expression (5).

$$0.11 \leq n_P/n_E \leq 9 \qquad (5)$$

In the above expression (4) and the above expression (5), $n_{Li}$ represents a molarity of lithium in the coating liquid. $n_E$ represents a molarity of the glass network forming element in the coating liquid, wherein the glass network forming element is boron. $n_P$ represents a molarity of phosphorus in the coating liquid.

When the coating liquid includes the first solute, a coating film including the first compound is expected to be formed. When the coating liquid includes the second solute, a coating film including the second compound is expected to be formed.

In the method of producing a positive electrode active material the second solute may further satisfy the relationship of the following expression (6).

$$0 \leq n_{Li}/(n_P+n_E) \leq 1.05 \qquad (6)$$

When the second solute satisfies the relationship of the above-mentioned expression (6), the second compound is expected to be produced.

In the method of producing a positive electrode active material the solvent may include water, for example.

When the solvent of the coating liquid includes water, the covering rate tends to rise

In the method of producing a positive electrode active material the (b) may include drying the mixture by spray drying, for example.

By spray drying, a thin, uniform coating film is expected to be formed, for example. Further, the covering rate is expected to be enhanced as well.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating a positive electrode active material according to the present embodiment.

Fig. 2 is a schematic flowchart illustrating a method of producing a positive electrode active material according to the present embodiment.

Fig. 3 is a conceptual view illustrating an all-solid-state battery according to the present embodiment.

Fig. 4 is Table 1 showing the contents of Experiment 1.

Fig. 5 is Table 2 showing the contents of Experiment 2.

DESCRIPTION OF THE PREFERRED EMBODIMENTS

<Description of Terms>

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

"At least one of A and B" includes "A or B" and "A and B". "At least one of A and B" may also be expressed as "A and/or B".

A singular form also includes its plural meaning, unless otherwise specified. For example, "a particle" may mean not only "one particle" but also "a plurality of particles (a particle group)" and "a group of particles (powder)".

Any geometric term (such as "parallel", "vertical", and "orthogonal", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting understanding for the readers. Further, a part of a given configuration may have been omitted.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean ±5%, ±3%, ±1%, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring.

"Copolymer" includes at least one selected from the group consisting of unspecified-type, statistical-type, random-type, alternating-type, periodic-type, block-type, and graft-type.

"Glass network forming element" refers to an element having glass-forming ability (GFA). GFA means that the element is capable of binding to oxygen to form oxide glass that has a network structure.

"Element concentration ($C_{Li}$, $C_E$, $C_P$)" is measured by the procedure described below. An element concentration is measured by X-ray photoelectron spectroscopy (XPS). XPS allows for acquiring information about the composition of the outermost surface of a particle. An XPS apparatus is prepared. For example, an XPS apparatus with the trade name "PHI X-tool" manufactured by ULVAC-PHI (or a similar product) may be used. A positive electrode active material (powder) is loaded in the XPS apparatus. With a pass energy of 224 eV, narrow scan analysis is carried out. The measurement data is processed with an analysis software. For example, an analysis software with the trade name "MulTiPak" manufactured by ULVAC-PHI (or a similar product) may be used. The peak area (integral value) of Li 1s spectrum is converted to the element concentration of Li ($C_{Li}$). The peak area of P 2p spectrum is converted to the element concentration of P ($C_P$). For E, a suitable spectrum is selected depending on the type thereof. For example, for B, the peak area of B 1s spectrum is converted to the element concentration of B ($C_E$). In the case where E consists of multiple types of elements, $C_E$ is regarded as the total concentration of all the elements.

"Covering rate" is measured by the procedure described below. The XPS data acquired in the above-described manner is analyzed, and from the peak areas for C 1s, O 1s, P 2p, M 2p3, and the like, the ratios of the elements (the element concentrations) are determined. By the following equation (7), the covering rate is determined.

$$\theta=(P+E)/(P+E+M)\times 100 \qquad (7)$$

In the above equation (7), $\theta$ represents the covering rate (%). Each of P, E, and M represents the ratio of the element. M refers to a constituent element of the active material particle other than Li and O. For example, M may include at least one selected from the group consisting of Ni, Co, Mn, and Al. For example, when the active material particle is "$LiNi_{1/3}Co_{1/3}Mn_{1/3}O_2$", the right side of the equation (7) may be changed to "(P+E)/(P+E+Ni+Co+Mn)". For example, when the active material particle is "$LiNi_{0.8}Co_{0.15}Al_{0.05}O_2$", the right side of the equation (7) may be changed to "(P+E)/(P+E+Ni+Co+Al)".

"Film thickness (the thickness of the coating film)" may be measured by the procedure described below. A positive electrode active material (powder) is embedded in a resin material to prepare a sample. With the use of an ion milling apparatus, a cross section of the sample is exposed. For example, an ion milling apparatus with the trade name "Arblade (registered trademark) 5000" manufactured by Hitachi High-Technologies (or a similar product) may be used. The cross section of the sample is examined with an SEM (Scanning Electron Microscope). For example, an SEM apparatus with the trade name "SU8030" manufactured by Hitachi High-Technologies (or a similar product) may be used. For each of ten particles, the film thickness is measured in twenty fields of view. The arithmetic mean of a total of these 200 measurements of film thickness is regarded as the film thickness.

"Molarity ($n_{Li}$, $n_E$, $n_P$)" is measured by the procedure described below. A coating liquid in an amount of 0.01 g is diluted with deionized water to prepare 100 ml of a sample liquid. Aqueous solutions of Li, E, and P (1000 ppm, 10000 ppm) are prepared, respectively. Each aqueous solution in an amount of 0.01 g is diluted with deionized water to prepare a reference liquid. An ICP-AES (Inductively Coupled Plasma Atomic Emission Spectroscopy) apparatus is prepared. With the ICP-AES apparatus, the emission intensity of the reference liquid is measured. From the emission intensity of the reference liquid, a calibration curve is created. With the ICP-AES apparatus, the emission intensity of the sample liquid (the diluted coating liquid) is measured. From the emission intensity of the sample liquid and the calibration curve, the mass concentration of each of Li, E, and P in the coating liquid is calculated. The mass concentration is converted to molarity ($n_{Li}$, $n_E$, $n_P$).

"D50" refers to a particle size in volume-based particle size distribution at which the cumulative frequency accumulated from the small particle size side reaches 50%. D50 may be measured by laser diffraction.

<Positive Electrode Active Material>

The positive electrode active material may be formed of a single particle. The positive electrode active material may be formed of two or more particles. The positive electrode active material may be powder (a group of particles). The positive electrode active material may have a D50 from 1 to 30 $\mu$m, or from 10 to 20 $\mu$m, or from 1 to 10 $\mu$m, for example.

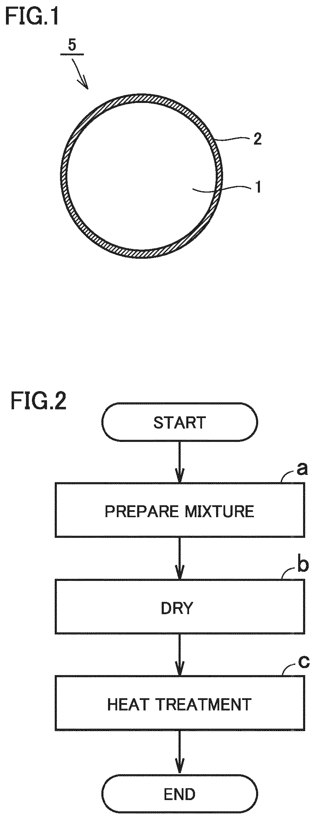

Fig. 1 is a conceptual view illustrating a positive electrode active material according to the present embodiment. A positive electrode active material 5 may also be called "a covered active material" and the like. Positive electrode active material 5 includes a composite particle. The composite particle has a core-shell structure. More specifically, positive electrode active material 5 includes an active material particle 1 and a coating film 2.

<Coating Film>

Coating film 2 is a shell for positive electrode active material 5. Coating film 2 covers at least part of the surface of active material particle 1. Coating film 2 includes a first compound or a second compound.

<First Compound>

The first compound includes a glass network forming element (E). The first compound does not include P. For example, E may include at least one selected from the group consisting of B, Si, N, S, Ge, and H. For example, E may be B. For example, the first compound may include B, Li, and O. For example, the first compound may include B and O as essential components and may include Li as an optional component.

The first compound satisfies the relationship of the following expression (1).

$$0.55 \leq C_{Li}/C_E \leq 1.03 \qquad (1)$$

With the relationship of the above-mentioned expression (1) being satisfied, battery resistance is expected to be reduced. "$C_{Li}/C_E$" may be 0.60 or less, or may be 0.60 or more, for example.

For example, the first compound may include oxide glass that has a network structure. For example, the first compound may include a boric acid framework. For example, when fragments of $BO_2^-$, $BO_3^-$, and/or the like are detected in TOF-SIMS (Time-of-Flight Secondary Ion Mass Spectrometry) of positive electrode active material 5, it is regarded that the first compound includes a boric acid framework.

<Second Compound>

The second compound includes P and E. For example, the second compound may include P, B, Li, and O. For example, the second compound may include P, B, and O as essential components and may include Li as an optional component.

The second compound satisfies the relationship of the following expression (2).

$$0.20 \leq C_P/C_E \leq 8.72 \qquad (2)$$

With the relationship of the above-mentioned expression (2) being satisfied, battery resistance is expected to be reduced. "$C_P/C_E$" may be 0.64 or more, or 0.96 or more, for example. "$C_P/C_E$" may be 2.05 or less, or 1.27 or less, for example. When "$C_P/C_E$" is 2.05 or less, battery resistance is expected to be reduced.

The second compound may further satisfy the relationship of the following expression (3).

$$0.49 \leq C_{Li}/(C_P+C_E) \leq 2.38 \qquad (3)$$

With the relationship of the above-mentioned expression (3) being satisfied, battery resistance is expected to be reduced. "$C_{Li}/(C_P+C_E)$" may be 1.90 or less, or 1.35 or less, or 0.69 or less, for example. "$C_{Li}/(C_P+C_E)$" may be 0.55 or more, or 0.69 or more, for example.

For example, the second compound may include oxide glass that has a network structure. For example, the second compound may include a phosphoric acid framework. For example, in addition to a phosphoric acid framework, the second compound may further include a boric acid framework. The phosphoric acid framework may form a composite with the boric acid framework. For example, the second compound may include boron phosphate and/or the like. For example, when fragments of $PO_2^-$, $PO_3^-$, and/or the like are detected in TOF-SIMS of positive electrode active material 5, it is regarded that the second compound includes a phosphoric acid framework.

<Film Thickness>

Coating film 2 may have a thickness from 5 to 100 nm, or from 5 to 50 nm, or from 10 to 30 nm, or from 20 to 30 nm, for example.

<Covering Rate>

Positive electrode active material 5 may have a covering rate of 89% or more, for example. The higher the covering rate is, the more enhanced the endurance is expected to be, for example. The endurance may be evaluated according to the capacity retention during high-temperature storage, and/or the like, for example. The covering rate may be 90% or more, or 92% or more, or 95% or more, for example. The covering rate may be 100% or less, or 97% or less, for example.

<Active Material Particle>

Active material particle 1 is the core of positive electrode active material 5. Active material particle 1 may have a D50 from 1 to 30 $\mu$m, or from 10 to 20 $\mu$m, or from 1 to 10 $\mu$m, for example. Active material particle 1 is capable of reversibly storing Li ions. Active material particle 1 may include any component. Active material particle 1 may include a transition metal oxide, a polyanion compound, and/or the like, for example. In active material particle 1, the composition may be uniform, or may be non-uniform. For example, there may be a gradient in the composition from the surface of the particle toward the center. The composition may change contiguously, or may change non-contiguously (in steps).

<Transition Metal Oxide: Space Group R-3m>

The transition metal oxide may have any crystal structure. For example, the transition metal oxide may include a crystal structure that belongs to a space group R-3m and/or the like. For example, a compound represented by the general formula "$LiMO_2$" may have a crystal structure that belongs to a space group R-3m. The transition metal oxide may be represented by the following formula (8-1), for example.

$$Li_{1-a}Ni_xM_{1-x}O_2 \qquad (8-1)$$

In the above formula, the relationships of $-0.5 \leq a \leq 0.5$, $0 \leq x \leq 1$ are satisfied.

M may include, for example, at least one selected from the group consisting of Co, Mn, and Al.

In the above formula (8-1), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.

The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

<NCM>

The transition metal oxide may be represented by the following formula (8-2), for example. A compound represented by the following formula (8-2) may also be called "NCM".

$$Li_{1-a}Ni_xCo_yMn_zO_2 \qquad (8\text{-}2)$$

In the above formula, the relationships of $-0.5 \leq a \leq 0.5$, $0 < x < 1$, $0 < y < 1$, $0 < z < 1$, $x+y+z=1$ are satisfied.

In the above formula (8-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (8-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (8-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}CO_{0.05}Mn_{0.05}O_2$.

<NCA>

The transition metal oxide may be represented by the following formula (8-3), for example. A compound represented by the following formula (8-3) may also be called "NCA".

$$Li_{1-a}Ni_xCo_yAl_zO_2 \qquad (8\text{-}3)$$

In the above formula, the relationships of $-0.5 \leq a \leq 0.5$, $0 < x < 1$, $0 < y < 1$, $0 < z < 1$, $x+y+z=1$ are satisfied.

In the above formula (8-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (8-3), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (8-3), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

<Multi-Component System>

Active material particle 1 may include two or more NCMs and/or the like, for example. Active material particle 1 may include NCM ($0.6 \leq x$) and NCM ($x<0.6$), for example. "NCM ($0.6 \leq x$)" refers to a compound in which x (Ni ratio) in the above formula (8-2) is 0.6 or more. NCM ($0.6 \leq x$) may also be called "a high-nickel material", for example. NCM ($0.6 \leq x$) includes $LiNi_{0.8}Co_{0.1}Mn_{0.1}O_2$ and/or the like, for example. "NCM($x<0.6$)" refers to a compound in which x (Ni ratio) in the above formula (8-2) is less than 0.6. NCM ($x<0.6$) includes $LiNi_{1/3}Co_{1/3}Mn_{1/3}O_2$ and/or the like, for example. The mixing ratio (mass ratio) between NCM ($0.6 \leq x$) and NCM ($x<0.6$) may be "NCM ($0.6 \leq x$)/NCM ($x<0.6$)=9/1 to 1/9", or "NCM ($0.6 \leq x$)/NCM ($x<0.6$)=9/1 to 4/6", or "NCM ($0.6 \leq x$)/NCM ($x<0.6$)=9/1 to 3/7", for example.

Active material particle 1 may include NCA and NCM, for example. The mixing ratio (mass ratio) between NCA and NCM may be "NCA/NCM=9/1 to 1/9", or "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

<<Transition Metal Oxide: Space Group C2/m>>

The transition metal oxide may include a crystal structure that belongs to a space group C2/m and/or the like, for example. The transition metal oxide may be represented by the following formula (8-4), for example.

$$Li_2MO_3 \qquad (8\text{-}4)$$

In the above formula, M may include, for example, at least one selected from the group consisting of Ni, Co, Mn, and Fe.

Active material particle 1 may include a mixture of $LiMO_2$ (space group R-3m) and $Li_2MO_3$ (space group C2/m), for example. Active material particle 1 may include a solid solution that is formed of $LiMO_2$ and $Li_2MO_3$ ($Li_2MO_3$-$LiMO_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by the following formula (8-5), for example.

$$LiMn_{2-x}M_xO_4 \qquad (8-5)$$

In the above formula, the relationship of $0 \leq x \leq 2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. Active material particle 1 may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2/LiM_2O_4$=9/1 to 9/1", or "$LiMO_2/LiM_2O_4$=9/1 to 5/5", or "$LiMO_2/LiM_2O_4$=9/1 to 7/3", for example.

<Polyanion Compound>

The polyanion compound may include a phosphoric acid salt (such as $LiFePO_4$ for example), a silicic acid salt, a boric acid salt, and/or the like, for example. The polyanion compound may be represented by the following formulae (8-6) to (8-9), for example.

$$LiMPO_4 \qquad (8-6)$$

$$Li_{2-x}MPO_4F \qquad (8-7)$$

$$Li_2MSiO_4 \qquad (8-8)$$

$$LiMBO_3 \qquad (8-9)$$

In the above formulae (8-6) to (8-9), M may include, for example, at least one selected from the group consisting of Fe, Mn, and Co. In the above formula (8-7), the relationship of $0 \leq x \leq 2$ may be satisfied, for example.

Active material particle 1 may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", or "$LiMO_2$/(polyanion compound) =9/1 to 5/5", or "$LiMO_2$/(polyanion compound) =9/1 to 7/3", for example.

<Dopant>

To active material particle 1, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of active material particle 1) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

<Hollow Particles, Solid Particles>

Each of a hollow particle and a solid particle is a secondary particle (an aggregate of primary particles). In a cross-sectional image of "a hollow particle", the proportion of the area of the central cavity relative to the entire cross-sectional area of the particle is 30% or more. The proportion of the cavity in a hollow particle may be 40% or more, or 50% or more, or 60% or more, for example. In a cross-sectional image of "a solid particle", the proportion of the area of the central cavity relative to the entire cross-sectional area of the particle is less than 30%. The proportion of the cavity in a solid particle may be 20% or less, or 10% or less, or 5% or less, for example. Active material particle 1 may be a hollow particle, or may be a solid particle. A mixture of hollow particles and solid particles may be used. The mixing ratio (mass ratio) between hollow particles and solid particles may be "(hollow particles)/(solid particles)=1/9 to 9/1", or "(hollow particles)/(solid particles) =2/8 to 8/2", or "(hollow particles)/(solid particles)=3/7 to 7/3", or "(hollow particles)/(solid particles)=4/6 to 6/4", for example.

<Large Particles, Small Particles>

"Electrode active material" collectively refers to a positive electrode active material and a negative electrode active material. The electrode active material may have a unimodal particle size distribution (based on the number), for example. The electrode active material may have a multimodal particle size distribution, for example. The electrode active material may have a bimodal particle size distribution, for example. That is, the electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles ($d_S$). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles ($S_S$) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From an electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM (0.6≤x) and the small particles may be NCM (x<0.6).

<Multilayered Film>

Coating film 2 may have a multilayer structure. Coating film 2 may include a first layer and a second layer, for example. The first layer may directly cover the surface of active material particle 1. The second layer may be laid on the first layer. The first layer includes the first compound or the second compound. The second layer may be a particle layer (a group of particles), for example. The second layer may be formed by a mechanochemical method, for example.

The second layer may include any component. The second layer may include an elementary substance, organic matter, an inorganic acid salt, an organic acid salt, a hydroxide, an oxide, a carbide, a nitride, a sulfide, a halide, and/or the like, for example. The second layer may include at least one of a sulfide solid electrolyte and a halide solid electrolyte, for example. The second layer may include, for example, at least one selected from the group consisting of B, Al, W, Zr, Ti, Co, F, lithium compound (such as $Li_2CO_3$, $LiHCO_3$, $LiOH$, $Li_2O$, for example), tungsten oxide (such as $WO_3$, for example),

titanium oxide (such as $TiO_2$, for example), zirconium oxide (such as $ZrO_2$, for example), aluminum oxide (such as $Al_2O_3$, for example), boehmite, aluminum hydroxide, polyacrylic acid salt (such as Li salt, Na salt, $NH_4$ salt), acetic acid salt (such as Li salt, for example), CMC (such as CMC-Na, CMC-Li, CMC-$NH_4$), $LiNbO_3$, $Li_2TiO_3$, and halide (such as $LiAlCl_4$, $LiTiAlF_6$, $LiYBr_6$, $LiYCl_6$, for example).

<Method of Producing Positive Electrode Active Material>

Fig. 2 is a schematic flowchart illustrating a method of producing a positive electrode active material according to the present embodiment. Hereinafter, the method of producing a positive electrode active material according to the present embodiment may also be simply called "the present production method". The present production method includes "(a) preparing a mixture" and "(b) drying". The present production method may further include "(c) heat treatment" and the like, for example.

<(a) Preparing Mixture>

The present production method includes preparing a mixture by mixing a coating liquid and active material particle 1. The details of active material particle 1 are as described above. For example, the mixture may be suspension, or may be wet powder. For example, active material particle 1 (powder) may be dispersed in the coating liquid to form a suspension. For example, the coating liquid may be sprayed into powder to form wet powder. In the present production method, any mixing apparatus, any granulation apparatus, and/or the like may be used.

The coating liquid includes a first solute and a solvent, or includes a second solute and a solvent. The first solute includes a raw material of the first compound. The second solute includes a raw material of the second compound. The coating liquid may further include suspended matter (an insoluble component), sediment, and the like, for example.

<Solvent>

As long as it can dissolve the solute, the solvent may include any component. The solvent may include water, alcohol, and/or the like, for example. The solvent may include ion-exchanged water, methanol, ethanol, and/or the like, for example. In coating film 2, carbon that is attributable to the solvent may remain. The carbon in coating film 2 may inhibit ionic conduction. When the solvent includes water, the carbon in coating film 2 may be reduced. For example, the coating liquid may consist of the first solute or the second solute, with the remainder being made up of water.

<First Solute>

The amount of the first solute to be used may be, for example, from 0.1 to 20 parts by mass, or from 1 to 15 parts by mass, or from 5 to 10 parts by mass, relative to 100 parts by mass of the solvent. The first solute includes E. The first solute does not include P. For example, E may include at least one selected from the group consisting of B, Si, N, S, Ge, and H. For example, E may be B. The first solute may include at least one selected from the group consisting of an oxoacid, an oxoacid salt, and an oxide. For example, the first solute may include at least one selected from the group consisting of boric acid, boric acid salt, silicic acid, nitric acid, sulfuric acid, and germanic acid. For example, the first solute may include at least one selected from the group consisting of orthoboric acid ($H_3BO_3$) and metaboric acid ($HBO_2$).

The first solute may further include a Li compound. The Li compound may include, for example, at least one selected from the group consisting of lithium hydroxide, lithium carbonate, and lithium nitrate. It should be noted that the first solute satisfies the relationship of the following expression (4).

$$0 \leq n_{Li}/n_E \leq 1 \qquad (4)$$

With the relationship of the above-mentioned expression (4) being satisfied, the first compound is expected to be produced.

<Second Solute>

The amount of the second solute to be used may be, for example, from 0.1 to 20 parts by mass, or from 1 to 15 parts by mass, or from 5 to 10 parts by mass, relative to 100 parts by mass of the solvent. The second solute includes P and E. For example, the second solute may include P and B. For example, the second solute may include at least one selected from the group consisting of phosphoric acid and a phosphoric acid salt, as well as at least one selected from the group consisting of boric acid and a boric acid salt. For example, the second solute may include at least one selected from the group consisting of anhydrous phosphoric acid ($P_2O_5$), orthophosphoric acid, pyrophosphoric acid, metaphosphoric acid [$(HPO_3)_n$], and polyphosphoric acid, as well as at least one selected from the group consisting of orthoboric acid ($H_3BO_3$) and metaboric acid ($HBO_2$). The second solute satisfies the relationship of the following expression (5).

$$0.11 \leq n_P/n_E \leq 9 \qquad (5)$$

With the relationship of the above-mentioned expression (5) being satisfied, the second compound is expected to be produced.

The second solute may further include a Li compound. For example, the second solute may satisfy the relationship of the following expression (6).

$$0 \leq n_{Li}/(n_P+n_E) \leq 1.05 \qquad (6)$$

With the relationship of the above-mentioned expression (6) being satisfied, battery resistance is expected to be reduced.

<(b) Drying>

The present production method includes producing positive electrode active material 5 by drying the mixture. The coating liquid adhered to the surface of active material particle 1 is dried, and thereby coating film 2 is produced. In the present production method, any drying method may be used.

For example, the mixture may be dried by spray drying. More specifically, the suspension is sprayed from a nozzle to form droplets. The droplets include active material particle 1 and the coating liquid. For example, the droplets may be dried with hot air to form positive electrode active material 5. Use of spray drying is expected to enhance the covering rate, for example.

The solid content (volume fraction) of the suspension for spray drying may be from 1 to 50%, or may be from 10 to 30%, for example. The diameter of the nozzle may be from 0.1 to 10 mm, or may be from 0.1 to 1 mm, for example. The temperature of the hot air may be from 100 to 200°C, for example.

For example, a tumbling fluidized-bed coating apparatus may be used to produce positive electrode active material 5. In the tumbling fluidized-bed coating apparatus, "(a) preparing a mixture" and "(b) drying" may proceed substantially at the same time.

<(c) Heat Treatment>

The present production method may include heat treatment of positive electrode active material 5. The heat treatment allows coating film 2 to be fixed. The heat treatment may also be called "calcination". In the present production method, any heat treatment apparatus may be used. The treatment temperature may be from 150 to 300°C, for example. The treatment duration may be from 1 to 10 hours, for example. The heat treatment may be carried out in the air, or the heat treatment may be carried out in an inert atmosphere, for example.

<All-Solid-State Battery>

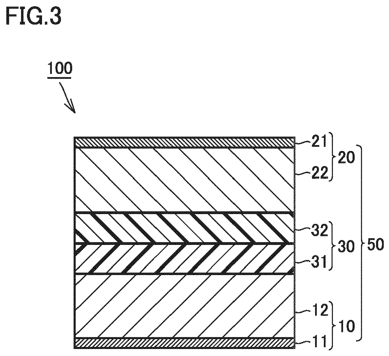

Fig. 3 is a conceptual view illustrating an all-solid-state battery according to the present embodiment. A battery 100 may be used in any application. For example, battery 100 may be used for an electric power supply of an electric vehicle, an electric tool, and the like. Battery 100 may have any outer shape. Battery 100 may have a plate-like outer shape, for example. Battery 100 includes a power generation element 50.

<Exterior Package>

Battery 100 may include an exterior package (not illustrated). The exterior package may accommodate power generation element 50. The exterior package may have any configuration. The exterior package may be a case made of metal, or may be a pouch made of a metal foil laminated film, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of battery 100.

Inside the exterior package, a cushioning material may be interposed between the exterior package and power generation element 50. The cushioning material is elastically deformable. The cushioning material may include a spring, a cushion, and/or the like, for example. In the case when battery 100 is mounted on an electric tool, for example, vibration is applied to power generation element 50. Due to the vibration, power generation element 50 may be damaged. The cushioning material may reduce the vibration that is applied to power generation element 50.

<Power Generation Element>

Power generation element 50 may also be called "an electrode group", "an electrode assembly", and the like. Power generation element 50 includes a positive electrode 10 and a negative electrode 20. Power generation element 50 may further include a separator layer 30. Separator layer 30 is interposed between positive electrode 10 and negative electrode 20. Power generation element 50 may have any configuration. Power generation element 50 may have a monopolar structure, or may have a bipolar structure, for example. In a bipolar structure, a positive electrode active material layer and a negative electrode active material layer may be placed on the respective sides of a current collector.

<Positive Electrode>

Positive electrode 10 is in sheet form. Positive electrode 10 may include a positive electrode current collector 11 and a positive electrode active material layer 12, for example.

<Positive Electrode Current Collector>

Positive electrode current collector 11 is electrically conductive. Positive electrode current collector 11 supports positive electrode active material layer 12. Positive electrode current collector 11 may be in sheet form, for example. Positive electrode current collector 11 may have a thickness from 5 to 50 $\mu$m, for example.

Positive electrode current collector 11 may have a monolayer structure, or may have a multilayer structure. Positive electrode current collector 11 may include, for example, at least one selected from the group consisting of a metal layer and an electrically-conductive resin layer. The metal layer may include at least one selected from the group consisting of a metal foil and a metallized film, for example. The metal layer may include at least one selected from the group consisting of Al, Mn, Ti, Fe, and Cr, for example. The metal layer may include an Al foil, an Al alloy foil, a Ti foil, a stainless steel (SUS) foil, and/or the like, for example. The electrically-conductive resin layer may include a matrix resin and an electrically-conductive filler, for example. The matrix resin may include polyolefin and/or the like, for example. The electrically-conductive filler may include at least one selected from the group consisting of carbon particles, carbon fibers, metal particles, and metal fibers, for example.

Positive electrode current collector 11 may further include PTC (Positive Temperature Coefficient) layer, for example. The PTC layer increases the resistance at the time when battery 100 is under a high temperature. The PTC layer may include a thermally expandable microcapsule, a conductive material, a binder, and the like, for example. As the thermally expandable microcapsule, "Matsumoto Microsphere" (trade name, registered trademark) manufactured by Matsumoto Yushi-Seiyaku, "Expancel" (trade name, registered trademark) manufactured by Japan Fillite, and/or the like may be used, for example. The thermally expandable microcapsule may be covered with a metal material (such as an Al deposited film, for example). At the time when battery 100 is under a high temperature, the thermally expandable microcapsule may expand and thereby the resistance of the PTC layer may be increased.

Positive electrode current collector 11 may include a cushioning layer, for example. The cushioning layer may include a cushioning material. The cushioning material may include resin foam and/or the like, for example. At the time when positive electrode 10 is roll-pressed, for example, the load applied to the metal layer (such as a metal foil), positive electrode active material layer 12, and the like is expected to be reduced by the cushioning layer.

<Positive Electrode Active Material Layer>

Positive electrode active material layer 12 is placed on the surface of positive electrode current collector 11. Positive electrode active material layer 12 may be placed on only one side of positive electrode current collector 11. Positive electrode active material layer 12 may be placed on both sides of positive electrode current collector 11. Positive electrode active material layer 12 may have a thickness from 10 to 1000 $\mu$m, or from 50 to 500 $\mu$m, or from 100 to 300 $\mu$m, for example. Positive electrode active material layer 12 includes a positive electrode active material and a solid electrolyte. Positive electrode active material layer 12 may further include a conductive material, a binder, and the like, for example.

<Solid Electrolyte>

The solid electrolyte may form an ion conduction path inside positive electrode active material layer 12. The solid electrolyte may be powder, for example. The solid electrolyte may have a D50 from 0.1 to 3 $\mu$m, for example. The D50 of the solid electrolyte may be 1 $\mu$m or less, or 0.5 $\mu$m or less, for example. The amount of the solid electrolyte to be used may be, for example, from 1 to 200 parts by volume, or from 50 to 150 parts by volume, or from 50 to 100 parts by volume, relative to 100 parts by volume of positive electrode active material 5.

The solid electrolyte includes a sulfide solid electrolyte. The sulfide solid electrolyte may be glass ceramic, or may be argyrodite, for example. The sulfide solid electrolyte may include, for example, at least one selected from the group consisting of LiI-LiBr-$Li_3PS_4$, $Li_2S$-$SiS_2$, LiI-$Li_2S$-$SiS_2$, LiI-$Li_2S$-$P_2S_5$, LiI-$Li_2O$-$Li_2S$-$P_2S_5$, LiI-$Li_2S$-$P_2O_5$, LiI-$Li_3PO_4$-$P_2S_5$, $Li_2S$-$GeS_2$-$P_2S_5$, $Li_2S$-$P_2S_5$, $Li_{10}GeP_2S_{12}$, $Li_4P_2S_6$, $Li_7P_3S_{11}$, $Li_3PS_4$, $Li_7PS_6$, and $Li_6PS_5X$ (X=Cl, Br, I).

For example, "LiI-LiBr-$Li_3PS_4$" refers to a sulfide solid electrolyte produced by mixing LiI, LiBr, and $Li_3PS_4$ in a freely-selected molar ratio. For example, the sulfide solid electrolyte may be produced by a mechanochemical method. "$Li_2S$-$P_2S_5$" includes $Li_3PS_4$. $Li_3PS_4$ may be produced by mixing $Li_2S$ and $P_2S_5$ in "$Li_2S/P_2S_5$=75/25 (molar ratio)", for example.

In addition to the sulfide solid electrolyte, positive electrode active material layer 12 may further include other solid electrolytes. Hereinafter, for the sake of convenience, the sulfide solid electrolyte is also called "a first solid electrolyte" and another solid electrolyte is also called "a second solid electrolyte". The volume ratio of the first solid electrolyte and the second solid electrolyte may be "(first solid electrolyte)/(second solid electrolyte)=1/99 to 99/1", or "(first solid electrolyte)/(second solid electrolyte)=1/9 to 9/1", or "(first solid electrolyte)/(second solid electrolyte)=3/7 to 7/3", for example. The first solid electrolyte and the second solid electrolyte may have been subjected to composing treatment.

The second solid electrolyte may include, for example, at least one selected from the group consisting of a halide solid electrolyte, an oxide solid electrolyte, a hydride solid electrolyte, and a nitride solid electrolyte.

The halide solid electrolyte may be represented by the following formula (9-1), for example.

$$Li_{6-na}M_aX_6 \qquad (9\text{-}1)$$

In the above formula, n represents an oxidation number of M. For example, M may include an atom whose oxidation number is +3. For example, M may include an atom whose oxidation number is +4. M may include, for example, at least one selected from the group consisting of Y, Al, Ti, Zr, Ca, and Mg. a may satisfy the relationship of 0<a<2. X may include, for example, at least one selected from the group consisting of F, Cl, Br, and I.

The halide solid electrolyte may be represented by the following formula (9-2), for example.

$$Li_{3-a}Ti_aAl_{1-a}F_6 \qquad (9\text{-}2)$$

In the above formula, a may satisfy the relationship of 0≤a≤0.1, or 0.1≤a≤0.2, or 0.2≤a≤0.3, or 0.3≤a≤0.4, or 0.4≤a≤0.5, or 0.5≤a≤0.6, or 0.6≤a≤0.7, or 0.7≤a≤0.8, or 0.8≤a≤0.9, or 0.9≤a≤1, for example.

The halide solid electrolyte may be represented by the following formula (9-3), for example.

$$Li_3YCl_aBr_bI_{6-a-b} \qquad (9\text{-}3)$$

In the above formula, the relationship of 0≤a+b≤6 is satisfied. a may satisfy the relationship of 0≤a≤1, or 1≤a≤2, or 2≤a≤3, or 3≤a≤4, or 4≤a≤5, or 5≤a≤6, for example. b may satisfy the relationship of 0≤b≤1, or 1≤b≤2, or 2≤b≤3, or 3≤b≤4, or 4≤b≤5, or 5≤b≤6, for example.

The oxide solid electrolyte may include, for example, at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$. The hydride solid electrolyte may include $LiBH_4$ and/or the like, for example. The nitride solid electrolyte may include $Li_3N$, $Li_3BN_2$, and/or the like, for example.

<Conductive Material>

The conductive material may form an electron conduction path inside positive electrode active material layer 12. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, acetylene black (AB), Ketjenblack (registered trademark), vapor grown carbon fibers (VGCFs), carbon nanotubes (CNTs), and graphene flakes (GFs). The CNTs may include at least one selected from the group consisting of single-walled CNTs (SWCNTs) and multi-walled CNTs (MWCNTs).

<Binder>

The binder is capable of fixing positive electrode active material layer 12 to positive electrode current collector 11.

The amount of the binder to be used may be, for example, from 0.1 to 10 parts by mass relative to 100 parts by mass of the positive electrode active material. The binder may include any component. The binder may include, for example, at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, and derivatives of these.

<Other Components>

Positive electrode active material layer 12 may further include an inorganic filler, an organic filler, a surface modifier, a dispersant, a lubricant, a flame retardant, a protective agent, a flux, a coupling agent, an adsorbent, and/or the like, for example. Positive electrode active material layer 12 may include polyoxyethylene allylphenyl ether phosphate, zeolite, silane coupling agent, $MoS_2$, $WO_3$, and/or the like, for example.

<Negative Electrode>

Negative electrode 20 is in sheet form. Negative electrode 20 may include a negative electrode current collector 21 and a negative electrode active material layer 22, for example.

<Negative Electrode Current Collector>

Negative electrode current collector 21 is electrically conductive. Negative electrode current collector 21 supports negative electrode active material layer 22. Negative electrode current collector 21 may be in sheet form, for example. Negative electrode current collector 21 may have a thickness from 5 to 50 $\mu$m, for example.

Negative electrode current collector 21 may include at least one selected from the group consisting of a metal layer and an electrically-conductive resin layer. Negative electrode current collector 21 may further include a PTC layer, a cushioning layer, and the like. The electrically-conductive resin layer, the PTC layer, and the cushioning layer may be the same as those in positive electrode current collector 11. The metal layer may include at least one selected from the group consisting of Cu, Ni, Fe, Zn, Pb, Ag, and Au, for example. The metal layer may include a Cu foil, a Cu alloy foil, and/or the like, for example.

<Negative Electrode Active Material Layer>

Negative electrode active material layer 22 is placed on the surface of negative electrode current collector 21. Negative electrode active material layer 22 may be placed on only one side of negative electrode current collector 21. Negative electrode active material layer 22 may be placed on both sides of negative electrode current collector 21. Negative electrode active material layer 22 may have a thickness from 10 to 1000 $\mu$m, or from 50 to 500 $\mu$m, or from 100 to 300 $\mu$m, for example. Negative electrode active material layer 22 includes a negative electrode active material and a solid electrolyte. Negative electrode active material layer 22 may further include a conductive material, a binder, and the like, for example.

<Negative Electrode Active Material>

The negative electrode active material may be in powder form, or may be in sheet form, for example. The negative electrode active material may have a D50 from 1 to 30 $\mu$m, or from 10 to 20 $\mu$m, or from 1 to 10 $\mu$m, for example.

<Carbon-Based Active Material>

The negative electrode active material may include a carbon-based active material, for example. The carbon-based active material may include, for example, at least one selected from the group consisting of graphite, soft carbon, and hard carbon. The "graphite" collectively refers to natural graphite and artificial graphite. The graphite may be a mixture of natural graphite and artificial graphite. The mixing ratio (mass ratio) may be "(natural graphite)/(artificial graphite) = 1/9 to 9/1", or "(natural graphite)/(artificial graphite) =2/8 to 8/2", or "(natural graphite)/(artificial graphite) =3/7 to 7/3", for example.

The graphite may include a dopant. The dopant may include, for example, at least one selected from the group consisting of B, N, P, Li, and Ca. The amount to be added, in molar fraction, may be from 0.01 to 5%, or from 0.1 to 3%, or from 0.1 to 1%, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of $Al(OH)_3$, AlOOH, $Al_2O_3$, $WO_3$, $Li_2CO_3$, $LiHCO_3$, and $Li_3PO_4$.

<Alloy-Based Active Material>

The negative electrode active material may include an alloy-based active material, for example. The negative electrode active material may include, for example, at least one selected from the group consisting of Si, Li silicate, SiO, Si-based alloy, Sn, SnO, and Sn-based alloy.

SiO may be represented by the following formula (10-1), for example. $SiO_x$ (10-1)

In the above formula, the relationship of 0<x<2 is satisfied.

In the above formula (10-1), x may satisfy the relationship of $0.5 \leq x \leq 1.5$, or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. The negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be, in molar fraction, from 0.01 to 5%, or from 0.1 to 3%, or from 0.1 to 1%, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate and/or Na silicate may be formed. For example, boron oxide (such as $B_2O_3$, for example), yttrium oxide (such as $Y_2O_3$, for example), and/or the like may be added to SiO.

<Si-C Composite Material>

The negative electrode active material may include a composite material of the carbon-based active material (such as graphite) and the alloy-based active material (such as Si), for example. A composite material including Si and carbon may also be called "a Si-C composite material". For example, Si microparticles may be dispersed inside carbon particles. For example, Si microparticles may be dispersed inside graphite particles. For example, Li silicate particles may be covered with a carbon material (such as amorphous carbon).

<Other Active Materials>

The negative electrode active material may include, for example, at least one selected from the group consisting of Li metal, Li-based alloy, and $Li_4Ti_5O_{12}$.

<Solid Electrolyte>

The solid electrolyte may form an ion conduction path inside negative electrode active material layer 22. The solid electrolyte may be in particle form. The solid electrolyte may have a D50 from 0.1 to 3 μm, for example. The D50 of the solid electrolyte may be 1 μm or less, or 0.5 μm or less, for example. The amount of the solid electrolyte to be used may be, for example, from 1 to 200 parts by volume, or from 50 to 150 parts by volume, or from 50 to 100 parts by volume, relative to 100 parts by volume of the negative electrode active material. The solid electrolyte of negative electrode active material layer 22 and that of positive electrode active material layer 12 may be the same as one another, or may be different from each other. Negative electrode active material layer 22 may include, for example, at least one selected from the group consisting of a sulfide solid electrolyte, a halide solid electrolyte, an oxide solid electrolyte, a hydride solid electrolyte, and a nitride solid electrolyte.

<Conductive Material>

The conductive material may form an electron conduction path inside negative electrode active material layer 22. The amount of the conductive material to be used may be, for example, from 0.1 to 10 parts by mass relative to 100 parts by mass of the negative electrode active material. The conductive material of negative electrode active material layer 22 and that of positive electrode active material layer 12 may be the same as one another, or may be different from each other.

<Binder>

The binder is capable of fixing negative electrode active material layer 22 to negative electrode current collector 21. The amount of the binder to be used may be, for example, from 0.1 to 10 parts by mass relative to 100 parts by mass of the negative electrode active material. The binder may include any component. The binder may include, for example, at least one selected from the group consisting of styrenebutadiene rubber (SBR), acrylate butadiene rubber (ABR), sodium alginate, CMC (such as CMC-H, CMC-Na, CMC-Li, CMC-NH$_4$), PAA (such as PAA-H, PAA-Na, PAA-Li), polyacrylonitrile (PAN), PVdF, PTFE, acrylic resin (acrylic acid ester copolymer), methacrylic resin (methacrylic acid ester copolymer), PVP, PVA, and derivatives of these. For example, the expression "CMC-Na" refers to a Na salt of CMC. For example, the expression "CMC-H" refers to an acid-type CMC. The same applies to "PAA-Na" and the like.

<Other Components>

Negative electrode active material layer 22 may further include an inorganic filler, an organic filler, a surface modifier, a dispersant, a lubricant, a flame retardant, a protective agent, a flux, a coupling agent, an adsorbent, and/or the like, for example. Negative electrode active material layer 22 may include a layered silicate (such as smectite, montmorillonite, bentonite, hectorite), an inorganic filler (such as solid alumina, hollow silica, boehmite), a polysiloxane compound, and/or the like, for example.

<Separator Layer>

Separator layer 30 is interposed between positive electrode 10 and negative electrode 20. Separator layer 30 separates positive electrode 10 from negative electrode 20. Separator layer 30 may have a thickness from 1 to 50 μm, for example.

Separator layer 30 may also be called "a solid electrolyte layer". Separator layer 30 includes a solid electrolyte. Separator layer 30 may further include a binder, for example. The solid electrolyte of separator layer 30 and that of the electrode active material layer may be the same as one another, or may be different from each other. Separator layer 30 may include, for example, at least one selected from the group consisting of a sulfide solid electrolyte, a halide solid electrolyte, an oxide solid electrolyte, a hydride solid electrolyte, and a nitride solid electrolyte. The amount of the binder to be used may be from 0.1 to 10 parts by mass relative to 100 parts by mass of the solid electrolyte. The binder of separator layer 30 and that of the electrode active material layer may be the same as one another, or may be different from each other.

Separator layer 30 may have a monolayer structure, or may have a multilayer structure. For example, separator layer 30 may have a structure of two to five layers. For example, each layer may have a different solid electrolyte. For example, each layer may have a different density. For example, each layer may have a different solid electrolyte particle size (such as D50, for example).

For example, separator layer 30 may include a first layer 31 and a second layer 32. First layer 31 is in contact with positive electrode active material layer 12. Second layer 32 is in contact with negative electrode active material layer 22. The ratio of the thickness between first layer 31 and second layer 32 may be "(first layer)/(second layer)=1/9 to 9/1", or "(first layer)/(second layer)=3/7 to 7/3", for example.

The composition of first layer 31 may be different from that of second layer 32. For example, it is possible that first layer 31 includes a sulfide solid electrolyte and second layer 32 includes a halide solid electrolyte. For example, it is possible that first layer 31 includes a halide solid electrolyte and second layer 32 includes a sulfide solid electrolyte. It is possible that first layer 31 includes both a sulfide solid electrolyte and a halide solid electrolyte. It is possible that second layer 32 includes both a sulfide solid electrolyte and a halide solid electrolyte. The volume ratio of the halide solid electrolyte to the sulfide solid electrolyte in first layer 31 (a first volume ratio) may be higher than the volume ratio of the halide solid electrolyte to the sulfide solid electrolyte in second layer 32 (a second volume ratio). The first volume ratio may be lower than the second volume ratio.

[Examples]

<Experiment 1>

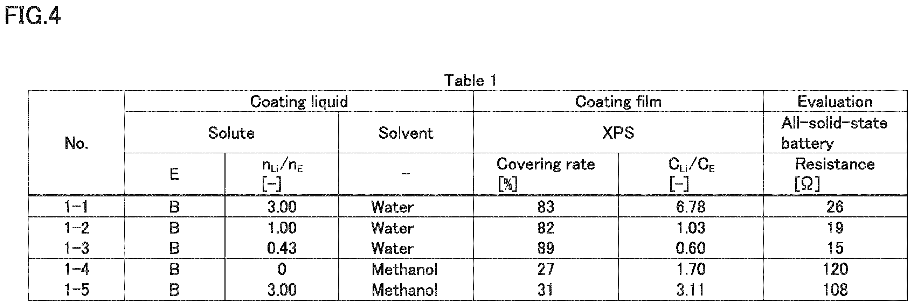

Fig. 4 is Table 1 showing the contents of Experiment 1. In Experiment 1, a coating film including the first compound was investigated. In the manner described below, positive electrode active materials and all-solid-state batteries of No. 1-1 to No. 1-5 were produced.

<Sample Production>

No. 1-1

Boric acid (manufactured by Nacalai Tesque; The same applies hereinafter.) in an amount of 6.7 parts by mass and lithium hydroxide monohydrate were dissolved in 166 parts by mass of ion-exchanged water to form a coating liquid. The molar ratio "$n_{Li}/n_E$" is shown in Fig. 4. In the present example, "$n_E$" represents the molarity of B.

As active material particles, NCM was prepared. The active material particles in an amount of 50 parts by mass were dispersed in 53.7 parts by mass of the coating liquid to prepare a suspension. A spray dryer with the trade name "Mini Spray Dryer B-290" manufactured by BUCHI was prepared. The suspension was fed to the spray dryer to dry the suspension. The suspension was dried, and thereby a positive electrode active material was produced. The temperature of the air supplied by the spray dryer was 200°C, and the amount of the air supply was 0.45 m³/min. The positive electrode active material was subjected to heat treatment in the air. The heat treatment temperature was 200°C. The heat treatment duration was 5 hours.

The below materials were prepared.

Sulfide solid electrolyte: 10LiI-15LiBr-75Li₃PS₄
Conductive material: VGCF
Binder: SBR
Dispersion medium: heptane
Positive electrode current collector: Al foil

The positive electrode active material, the sulfide solid electrolyte, the conductive material, the binder, and the dispersion medium were mixed together to prepare a positive electrode slurry. The mixing ratio between the positive electrode active material and the sulfide solid electrolyte was "(positive electrode active material)/(sulfide solid electrolyte) =6/4 (volume ratio)". The amount of the conductive material to be used was 3 parts by mass relative to 100 parts by mass of the positive electrode active material. The amount of the binder to be used was 3 parts by mass relative to 100 parts by mass of the positive electrode active material. The positive electrode slurry was sufficiently stirred with the use of an ultrasonic homogenizer. The positive electrode slurry was applied to the surface of the positive electrode current collector to form a positive electrode active material layer. The positive electrode active material layer was dried on a hot plate at 100°C for 30 minutes. In this manner, a positive electrode raw sheet was produced. From the resulting positive electrode raw sheet, a disk-shaped positive electrode was cut out. The area of the positive electrode was 1 cm².

A negative electrode and a separator layer were prepared. The negative electrode active material was graphite. The same type of sulfide solid electrolyte was used for the positive electrode, the separator layer, and the negative electrode. Inside a tubular jig, the positive electrode, the separator layer, and the negative electrode were stacked to form a stack. The resulting stack was pressed to form a power generation element. A terminal was connected to the power generation element to form an all-solid-state battery. The resistance of the all-solid-state battery was measured. Results of the measurement are shown in Fig. 4.

No. 1-2, No. 1-3

Positive electrode active materials and all-solid-state batteries were produced in the same manner as in No. 1-1 except that the amounts of boric acid and lithium hydroxide monohydrate to be dissolved were adjusted so as to achieve the molar ratio "$n_{Li}/n_E$" in the coating liquid as specified in Fig. 4.

No. 1-4

Boric acid in an amount of 0.13 parts by mass was dissolved in 100 parts by mass of methanol to form a coating liquid. Further, 50 parts by mass of the active material particles were dispersed in 300 parts by mass of the coating liquid to prepare a suspension. Except for these, in the same manner as in No. 1-1, a positive electrode active material and an all-solid-state battery were produced.

No. 1-5

Lithium hydroxide monohydrate was dissolved in the coating liquid of No. 1-4 so as to achieve the molar ratio "$n_{Li}/n_E$" as specified in Fig. 4, to prepare a coating liquid. Except for this, in the same manner as in No. 1-1, a positive electrode active material and an all-solid-state battery were produced.

# EP 4 425 601 B1

<Results>

When the relationship of "$0.55 \leq C_{Li}/C_E \leq 1.03$" is satisfied in the positive electrode active material, resistance tends to be reduced (see Fig. 4). In the present example, "$C_E$" represents the element concentration of B.

When the coating liquid includes an organic solvent (methanol), the covering rate tends to be decreased. When the coating liquid includes water, the covering rate tends to be enhanced.

<Experiment 2>

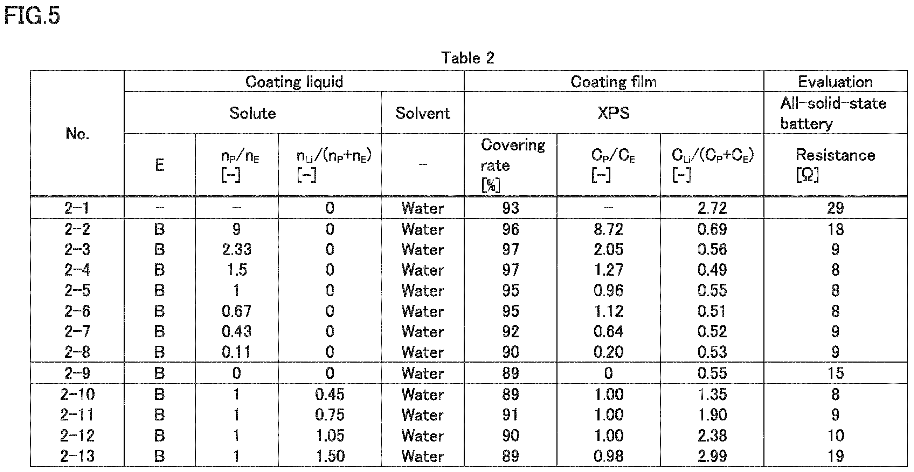

Fig. 5 is Table 2 showing the contents of Experiment 2. In Experiment 2, a coating film including the second compound was investigated. In the manner described below, positive electrode active materials and all-solid-state batteries of No. 2-1 to No. 2-13 were produced.

<Sample Production>

No. 2-1

Metaphosphoric acid (manufactured by FUJIFILM Wako Pure Chemical; The same applies hereinafter.) in an amount of 10.8 parts by mass was dissolved in 166 parts by mass of ion-exchanged water to form a coating liquid. Except for this, in the same manner as in No. 1-1, a positive electrode active material and an all-solid-state battery were produced.

No. 2-2

Metaphosphoric acid in an amount of 10.8 parts by mass was dissolved in 166 parts by mass of ion-exchanged water to form a phosphoric acid solution. Boric acid was dissolved in the phosphoric acid solution to prepare a coating liquid. The molar ratio "$n_P/n_E$" is shown in Fig. 5. Except for this, in the same manner as in No. 2-1, a positive electrode active material and an all-solid-state battery were produced.

No. 2-3 to No. 2-8

Positive electrode active materials and all-solid-state batteries were produced in the same manner as in No. 2-2 except that the amount of boric acid to be dissolved was adjusted so as to achieve the molar ratio "$n_P/n_E$" in the coating liquid as specified in Fig. 5.

No. 2-9

Boric acid in an amount of 6.7 parts by mass was dissolved in 166 parts by mass of ion-exchanged water to form a coating liquid. In the same manner as in No. 2-1, a positive electrode active material and an all-solid-state battery were produced.

No. 2-10 to No. 2-13

Lithium hydroxide monohydrate was dissolved in the coating liquid of No. 2-5 so as to achieve the molar ratio "$n_{Li}/(n_P+n_E)$" as specified in Fig. 5, to prepare a coating liquid. Except for this, in the same manner as in No. 2-1, positive electrode active materials and all-solid-state batteries were produced.

<Results>

When the relationship of "$0.20 \leq C_P/C_E \leq 8.72$" is satisfied in the positive electrode active material, resistance tends to be reduced.

When the relationship of "$0.49 \leq C_{Li}/(C_P+C_E) \leq 2.38$" is satisfied in the positive electrode active material, resistance tends to be reduced.

**Claims**

1.  A positive electrode active material comprising:

an active material particle (1); and
a coating film (2), wherein
the coating film (2) covers at least part of a surface of the active material particle (1),
the coating film (2) includes a first compound or a second compound,
the first compound includes a glass network forming element,

the first compound does not include phosphorus,
the first compound satisfies a relationship of an expression (1):

$$0.55 \leq C_{Li}/C_E \leq 1.03 \qquad (1)$$

the second compound includes phosphorus and the glass network forming element,
the second compound satisfies a relationship of an expression (2):

$$0.20 \leq C_P/C_E \leq 8.72 \qquad (2)$$

in the above expression (1) and the above expression (2),

each of $C_{Li}$, $C_E$, and $C_P$ represents an element atomic concentration measured by X-ray photoelectron spectroscopy,
$C_{Li}$ represents an element atomic concentration of lithium,
$C_E$ represents an element atomic concentration of the glass network forming element, wherein the glass network forming element is boron, and
$C_P$ represents an element atomic concentration of phosphorus.

2. The positive electrode active material according to claim 1, wherein the second compound further satisfies a relationship of an expression (3):

$$0.49 \leq C_{Li}/(C_P+C_E) \leq 2.38 \qquad (3).$$

3. The positive electrode active material according to claim 1, wherein the positive electrode active material has a covering rate of 89% or more, and the covering rate is measured by X-ray photoelectron spectroscopy.

4. A positive electrode comprising the positive electrode active material (5) according to claim 1 and a sulfide solid electrolyte.

5. An all-solid-state battery comprising the positive electrode (10) according to claim 4.

6. A method of producing a positive electrode active material, the method comprising:

(a) preparing a mixture by mixing a coating liquid and an active material particle (1); and
(b) producing a positive electrode active material (5) by drying the mixture, wherein
the coating liquid includes a first solute or a second solute and a solvent,
the first solute includes a glass network forming element,

the first solute does not include phosphorus,
the first solute satisfies a relationship of an expression (4):

$$0 \leq n_{Li}/n_E \leq 1 \qquad (4)$$

the second solute includes phosphorus and the glass network forming element,
the second solute satisfies a relationship of an expression (5):

$$0.11 \leq n_P/n_E \leq 9 \qquad (5)$$

in the above expression (4) and the above expression (5),

$n_{Li}$ represents a molarity of lithium in the coating liquid,
$n_E$ represents a molarity of the glass network forming element in the coating liquid, wherein the glass network forming element is boron, and
$n_P$ represents a molarity of phosphorus in the coating liquid.

7. The method of producing a positive electrode active material according to claim 6, wherein the second solute further satisfies a relationship of an expression (6):

$$0 \leq n_{Li}/(n_P + n_E) \leq 1.05 \qquad (6).$$

8. The method of producing a positive electrode active material according to claim 6, wherein the solvent includes water.

9. The method of producing a positive electrode active material according to claim 6, wherein the (b) includes drying the mixture by spray drying.

**Patentansprüche**

1. Aktivmaterial für positive Elektroden, umfassend:

ein Aktivmaterialpartikel (1); und
einen Beschichtungsfilm (2), wobei
der Beschichtungsfilm (2) mindestens einen Teil einer Oberfläche des Aktivmaterialpartikels (1) bedeckt,
der Beschichtungsfilm (2) eine erste Verbindung oder eine zweite Verbindung enthält,
die erste Verbindung ein glasnetzwerkbildendes Element enthält,
die erste Verbindung keinen Phosphor enthält,
die erste Verbindung eine Beziehung eines Ausdrucks (1) erfüllt:

$$0{,}55 \leq C_{Li}/C_E \leq 1{,}03 \quad (1)$$

die zweite Verbindung Phosphor und das glasnetzwerkbildende Element enthält,
die zweite Verbindung eine Beziehung eines Ausdrucks (2) erfüllt:

$$0{,}20 \leq C_P/C_E \leq 8{,}72 \quad (2)$$

in dem obigen Ausdruck (1) und dem obigen Ausdruck (2) $C_{Li}$, $C_E$ und $C_P$ jeweils eine mittels Röntgenphotoelektronenspektroskopie gemessene Elementatomkonzentration darstellen,
$C_{Li}$ eine Elementatomkonzentration von Lithium darstellt, $C_E$ eine Elementatomkonzentration des glasnetzwerkbildenden Elements darstellt, wobei es sich bei dem glasnetzwerkbildenden Element um Bor handelt, und $C_P$ eine Elementatomkonzentration von Phosphor darstellt.

2. Aktivmaterial für positive Elektroden nach Anspruch 1, wobei die zweite Verbindung ferner eine Beziehung eines Ausdrucks (3) erfüllt:

$$0{,}49 \leq C_{Li}/(C_P + C_E) \leq 2{,}38 \quad (3).$$

3. Aktivmaterial für positive Elektroden nach Anspruch 1, wobei

das Aktivmaterial für positive Elektroden eine Bedeckungsrate von 89 % oder mehr aufweist und
die Bedeckungsrate mittels Röntgenphotoelektronenspektroskopie gemessen wird.

4. Positive Elektrode, umfassend das Aktivmaterial (5) für positive Elektroden nach Anspruch 1 und einen Sulfid-Festelektrolyt.

**5.** Festkörperbatterie, umfassend die positive Elektrode (10) nach Anspruch 4.

**6.** Verfahren zum Herstellen eines Aktivmaterials für positive Elektroden, wobei das Verfahren Folgendes umfasst:

(a) Herstellen einer Mischung durch Mischen einer Beschichtungsflüssigkeit und eines Aktivmaterialpartikels (1); und
(b) Herstellen eines Aktivmaterials (5) für positive Elektroden durch Trocknen der Mischung, wobei die Beschichtungsflüssigkeit einen ersten gelösten Stoff oder einen zweiten gelösten Stoff und ein Lösungsmittel enthält,
der erste gelöste Stoff ein glasnetzwerkbildendes Element enthält,
der erste gelöste Stoff keinen Phosphor enthält,
der erste gelöste Stoff eine Beziehung eines Ausdrucks (4) erfüllt:

$$0 \leq n_{Li}/n_E \leq 1 \quad (4)$$

der zweite gelöste Stoff Phosphor und das glasnetzwerkbildende Element enthält,
der zweite gelöste Stoff eine Beziehung eines Ausdrucks (5) erfüllt:

$$0,11 \leq n_P/n_E \leq 9 \quad (5)$$

in dem obigen Ausdruck (4) und dem obigen Ausdruck (5) $n_{Li}$ eine Molarität von Lithium in der Beschichtungsflüssigkeit darstellt,
$n_E$ eine Molarität des glasnetzwerkbildenden Elements in der Beschichtungsflüssigkeit darstellt, wobei es sich bei dem glasnetzwerkbildenden Element um Bor handelt, und
$n_P$ eine Molarität von Phosphor in der Beschichtungsflüssigkeit darstellt.

**7.** Verfahren zum Herstellen eines Aktivmaterials für positive Elektroden nach Anspruch 6, wobei der zweite gelöste Stoff ferner eine Beziehung eines Ausdrucks (6) erfüllt:

$$0 \leq n_{Li}/(n_P+n_E) \leq 1,05 \quad (6).$$

**8.** Verfahren zum Herstellen eines Aktivmaterials für positive Elektroden nach Anspruch 6, wobei das Lösungsmittel Wasser enthält.

**9.** Verfahren zum Herstellen eines Aktivmaterials für positive Elektroden nach Anspruch 6, wobei das (b) das Trocknen der Mischung durch Sprühtrocknung beinhaltet.

**Revendications**

**1.** Matériau actif d'électrode positive comprenant :

une particule de matériau actif (1) ; et
un film de revêtement (2), dans lequel
le film de revêtement (2) recouvre au moins une partie d'une surface de la particule de matériau actif (1),
le film de revêtement (2) comprend un premier composé ou un second composé,
le premier composé comporte un élément de formation de réseau de verre,
le premier composé ne comprend pas de phosphore,
le premier composé satisfait une relation d'une expression (1) :

$$0,55 \leq C_{Li}/C_E \leq 1,03 \quad (1)$$

le second composé comprend du phosphore et l'élément de formation de réseau de verre,
le second composé satisfait une relation d'une expression (2) :

$$0,20 \leq C_P/C_E \leq 8,72 \quad (2)$$

dans l'expression (1) ci-dessus et l'expression (2) ci-dessus,
chaque $C_{Li}$, $C_E$ et $C_P$ représente une concentration atomique d'élément mesurée par spectroscopie photoélectronique X, $C_{Li}$ représente une concentration atomique d'élément de lithium,
$C_E$ représente une concentration atomique d'élément de l'élément de formation de réseau de verre, dans lequel l'élément de formation de réseau de verre est le bore, et
$C_P$ représente une concentration atomique d'élément de phosphore.

2. Matériau actif d'électrode positive selon la revendication 1, dans lequel le second composé satisfait en outre une relation d'une expression (3) :

$$0{,}49 \leq C_{Li}/(C_P+C_E) \leq 2{,}38 \quad (3).$$

3. Matériau actif d'électrode positive selon la revendication 1, dans lequel

le matériau actif d'électrode positive a un taux de recouvrement de 89 % ou plus, et
le taux de recouvrement est mesuré par spectroscopie photoélectronique X.

4. Électrode positive comprenant le matériau actif d'électrode positive (5) selon la revendication 1 et un électrolyte solide de sulfure.

5. Batterie entièrement à l'état solide comprenant l'électrode positive (10) selon la revendication 4.

6. Procédé de fabrication d'un matériau actif d'électrode positive, le procédé comprenant :

(a) la préparation d'un mélange par mélange d'un liquide de revêtement et d'une particule de matériau actif (1) ; et
(b) la production d'un matériau actif d'électrode positive (5) par séchage du mélange, dans lequel
le liquide de revêtement comprend un premier soluté ou un second soluté et un solvant,
le premier soluté comprend un élément de formation de réseau de verre,
le premier soluté ne comprend pas de phosphore,
le premier soluté satisfait une relation d'une expression (4) :

$$0 \leq n_{Li}/n_E \leq 1 \quad (4)$$

le second soluté comprend du phosphore et l'élément de formation de réseau de verre,
le second soluté satisfait une relation d'une expression (5) :

$$0{,}11 \leq n_P/n_E \leq 9 \quad (5)$$

dans l'expression (4) ci-dessus et l'expression (5) ci-dessus,
$n_{Li}$ représente une molarité du lithium dans le liquide de revêtement,
$n_E$ représente une molarité de l'élément de formation de réseau de verre dans le liquide de revêtement, dans lequel l'élément de formation de réseau de verre est le bore, et
$n_e$ représente une molarité du phosphore dans le liquide de revêtement.

7. Procédé de production d'un matériau actif d'électrode positive selon la revendication 6, dans lequel le second soluté satisfait en outre une relation d'une expression (6) :

$$0 \leq n_{Li}/(n_P+n_E) \leq 1{,}05 \quad (6).$$

8. Procédé de production d'un matériau actif d'électrode positive selon la revendication 6, dans lequel le solvant comprend de l'eau.

9. Procédé de production d'un matériau actif d'électrode positive selon la revendication 6, dans lequel (b) comprend le séchage du mélange par pulvérisation.

FIG.1

FIG.2

FIG.3

# FIG.4

Table 1

| No. | Coating liquid | | | Coating film | | Evaluation |
|---|---|---|---|---|---|---|
| | Solute | | Solvent | XPS | | All-solid-state battery |
| | E | $n_{Li}/n_E$ [−] | − | Covering rate [%] | $C_{Li}/C_E$ [−] | Resistance [Ω] |
| 1-1 | B | 3.00 | Water | 83 | 6.78 | 26 |
| 1-2 | B | 1.00 | Water | 82 | 1.03 | 19 |
| 1-3 | B | 0.43 | Water | 89 | 0.60 | 15 |
| 1-4 | B | 0 | Methanol | 27 | 1.70 | 120 |
| 1-5 | B | 3.00 | Methanol | 31 | 3.11 | 108 |

# FIG.5

Table 2

| No. | Coating liquid | | | | Coating film | | | Evaluation |
| | Solute | | | Solvent | XPS | | | All-solid-state battery |
| | E | $n_P/n_E$ [-] | $n_{Li}/(n_P+n_E)$ [-] | - | Covering rate [%] | $C_P/C_E$ [-] | $C_{Li}/(C_P+C_E)$ [-] | Resistance [Ω] |
|---|---|---|---|---|---|---|---|---|
| 2-1 | - | - | 0 | Water | 93 | - | 2.72 | 29 |
| 2-2 | B | 9 | 0 | Water | 96 | 8.72 | 0.69 | 18 |
| 2-3 | B | 2.33 | 0 | Water | 97 | 2.05 | 0.56 | 9 |
| 2-4 | B | 1.5 | 0 | Water | 97 | 1.27 | 0.49 | 8 |
| 2-5 | B | 1 | 0 | Water | 95 | 0.96 | 0.55 | 8 |
| 2-6 | B | 0.67 | 0 | Water | 95 | 1.12 | 0.51 | 8 |
| 2-7 | B | 0.43 | 0 | Water | 92 | 0.64 | 0.52 | 9 |
| 2-8 | B | 0.11 | 0 | Water | 90 | 0.20 | 0.53 | 9 |
| 2-9 | B | 0 | 0 | Water | 89 | 0 | 0.55 | 15 |
| 2-10 | B | 1 | 0.45 | Water | 89 | 1.00 | 1.35 | 8 |
| 2-11 | B | 1 | 0.75 | Water | 91 | 1.00 | 1.90 | 9 |
| 2-12 | B | 1 | 1.05 | Water | 90 | 1.00 | 2.38 | 10 |
| 2-13 | B | 1 | 1.50 | Water | 89 | 0.98 | 2.99 | 19 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023031964 A
- JP 2003338321 A
- WO 20212210000 A1
- EP 4024514 A1
- US 20220173393 A1